# EUROPÄISCHE PATENTANMELDUNG

(11) **EP 4 443 168 A1**
(43) Veröffentlichungstag der Anmeldung: **09.10.2024**
(21) Anmeldenummer: 24163318.9
(22) Anmeldetag: 13.03.2024
(51) Int. Cl.: G01N 35/10

(54) **VERFAHREN ZUM BETREIBEN EINES PIPETTIERAUTOMATEN UND PIPETTIERAUTOMAT**

(30) Priorität: 03.04.2023 DE 102023108482
(71) Anmelder: BRAND GMBH + CO KG, 97877 Wertheim (DE)
(72) Erfinder: Gödde, Daniel, 97941 Tauberbischofsheim (DE); Scholten, David, 97906 Faulbach (DE)
(74) Vertreter: Von Rohr Patentanwälte Partnerschaft mbB

(57) **Zusammenfassung**

Die vorliegende Erfindung betrifft ein Verfahren zum Betreiben eines Pipettierautomaten, wobei von einer Pipettenspitze eine Flüssigkeit in ein Well abgeben wird und an einer Außenseite befindliche Flüssigkeit an einer Seitenwand des Wells abgestreift wird.

## Beschreibung

Die vorliegende Erfindung betrifft ein Verfahren zum Betreiben eines Pipettierautomaten und einen zur Durchführung des Verfahrens ausgebildeten Pipettierautomaten. Ferner betrifft die vorliegende Erfindung auch ein Computerprogramm und ein computerlesbares Medium.

Aus dem Stand der Technik sind bereits Verfahren zum Betreiben eines Pipettierautomaten, auch als Pipettierroboter bezeichnet, bekannt.

Die US 5,736,105 A beschreibt ein Verfahren und eine Vorrichtung zum simultanen Transfer einer Vielzahl von Flüssigkeitsproben. Bei der Abgabe von Flüssigkeit von einer Pipettenspitze in einen Aufnahmebehälter kann eine kleine Flüssigkeitsmenge an der Pipettenspitze verbleiben. Zum Entfernen der Flüssigkeit wird die Pipettenspitze stationär in einer Position gehalten und der Aufnahmebehälter relativ zu der stationär positionierten Pipettenspitze bewegt, sodass die Pipettenspitze eine Seitenwand des Aufnahmebehälters berührt.

Die US 2019/0195905 A1 betrifft ein durch einen Robotersystem ausgeführtes Pipettierverfahren, bei dem Pipetten mit daran befestigten Spitzen in eine in einem Behälter befindliche Flüssigkeit eingetaucht werden und Flüssigkeit in die Spitzen aspiriert wird. Anschließend werden die Pipette und die daran befestigte Spitze horizontal bewegt, sodass die Spitze in Kontakt mit einer inneren Seitenwand des Behälters gelangt. Danach wird die Spitze aus dem Behälter herausgezogen, wobei an der Außenseite der Spitze befindliche Flüssigkeit durch die Oberflächenspannung an der Behälterinnenseite abgestreift wird. Die US 2019/0195905 betrifft lediglich das Abstreifen von Flüssigkeit beim bzw. nach Aufsaugen der Flüssigkeit aus dem Behälter.

Es ist eine Aufgabe der vorliegenden Erfindung, eine Lösung anzugeben, die ein hochgenaues Abgeben von Flüssigkeit von einer Pipettenspitze mittels eines Pipettierautomaten erlaubt und/oder durch die Kontaminationen beim Pipettieren von Flüssigkeiten von einer Pipettenspitze oder beim Bewegen der Pipettenspitze, verhindert oder zumindest minimiert werden.

Die obige Aufgabe wird durch ein Verfahren gemäß Anspruch 1, einen Pipettierautomaten gemäß Anspruch 13, ein Computerprogramm gemäß Anspruch 14 oder ein computerlesbares Medium gemäß Anspruch 15 gelöst. Vorteilhafte Weiterbildungen sind Gegenstand der Unteransprüche.

Das vorschlagsgemäße Verfahren dient zum Betreiben eines Pipettierautomaten.

Der Pipettierautomat weist eine Pipettiervorrichtung zum Aufnehmen und Abgeben von Flüssigkeit auf. Die Pipettiervorrichtung weist eine Verdrängereinrichtung und eine vorzugsweise auswechselbare Pipettenspitze mit einem ersten Ende und einem zweiten Ende auf, wobei das erste Ende mit der Verdrängereinrichtung verbunden ist und das zweite Ende eine Öffnung zum Aufnehmen, insbesondere Ansaugen, von Flüssigkeit in die Pipettenspitze und Abgeben von Flüssigkeit von der Pipettenspitze aufweist.

Weiter weist der Pipettierautomat mindestens eine Aufnahmeeinrichtung, bevorzugt mehrere Aufnahmeeinrichtungen, zum Aufnehmen von Flüssigkeit von der Pipettiervorrichtung auf. Die Aufnahmeeinrichtung weist mindestens ein Well mit einer vorzugsweise im Wesentlichen vertikalen Seitenwand mit einem oberen Rand auf. Vorzugsweise weist der Pipettierautomat auch eine oder mehrere Abgabeeinrichtungen zum Abgeben von Flüssigkeit an die Pipettiervorrichtung auf, die insbesondere jeweils auch mindestens ein Well mit einer vorzugsweise im Wesentlichen vertikalen Seitenwand mit einem oberen Rand aufweisen.

Das vorschlagsgemäße Verfahren umfasst die nachfolgenden Schritte a) bis e):
a) Positionieren der Pipettenspitze in einer Abgabestartposition zum Abgeben von in der Pipettenspitze befindlichen Flüssigkeit in das Well.
b) Abgeben von Flüssigkeit aus der Pipettenspitze durch die Öffnung, wobei sich nach dem Abgeben zumindest ein Teil der abgegebenen Flüssigkeit an einer Außenseite der Pipettenspitze und/oder der Öffnung befindet. Die Flüssigkeit befindet sich insbesondere in Form eines Tropfens an der Außenseite der Pipettenspitze und/oder der Öffnung. Dies ist jedoch nicht zwingend.
c) Bewegen der Pipettenspitze von der Abgabestartposition in eine Abstreifstartposition, wobei das Bewegen eine horizontale Bewegung der Pipettenspitze bzw. Öffnung umfasst, wobei in der Abstreifstartposition die Öffnung der Pipettenspitze unterhalb des oberen Rands des Wells positioniert ist und die Pipettenspitze und/oder die daran befindliche Flüssigkeit die Seitenwand des Wells berührt.
d) Bewegen der Pipettenspitze von der Abstreifstartposition in eine Abstreifendposition in einer Abstreifbewegung im Wesentlichen parallel zu der Seitenwand, wobei das Bewegen eine vertikale und/oder horizontale Bewegung der Pipettenspitze bzw. Öffnung umfasst, wobei in der Abstreifendposition die Öffnung unterhalb oder auf Höhe des oberen Rands des Wells positioniert ist, wobei sich während der Abstreifbewegung Flüssigkeit von der Pipettenspitze löst und/oder die Seitenwand des Wells benetzt.
e) Bewegen der Pipettenspitze von der Abstreifendposition in eine Abgabeendposition, wobei das Bewegen eine horizontale Bewegung der Pipettenspitze bzw. Öffnung umfasst und in der Abgabeendposition die Pipettenspitze einen größeren Abstand zu der Seitenwand des Wells aufweist als in der Abstreifendposition. Insbesondere kann die Pipettenspitze beim Bewegen von der Abstreifendposition in die Abgabeendposition aus dem Well herausbewegt werden. Vorzugsweise besteht das Bewegen von der Abstreifendposition in eine Abgabeendposition ausschließlich aus einer horizontalen Bewegung. Hierdurch kann insbesondere ein "Wegschnalzen" der Pipettenspitze von der Seitendwand verhindert werden.

Durch das vorschlagsgemäße Verfahren bzw. die Schritte a) bis e) wird ein hochgenaues und/oder kontaminationsfreies Pipettieren, insbesondere Abgeben von Flüssigkeit von der Pipettenspitze, mittels des Pipettierautomaten ermöglicht bzw. erreicht. Insbesondere wird durch das vorschlagsgemäße Abstreifen von Flüssigkeit an der Seitenwand des Wells sichergestellt, dass die zum Abgeben in das Well vorgesehene Flüssigkeitsmenge möglichst vollständig bzw. exakt in das Well abgegeben wird. Ferner wird sichergestellt, dass sich nach dem Abgeben von Flüssigkeit von der Pipettenspitze in das Well keine Flüssigkeit mehr an der Pipettenspitze befindet oder zumindest die Menge der nach dem Abgeben an der Pipettenspitze verbleibenden Flüssigkeit so gering ist, dass diese beim weiteren Bewegen der Pipettenspitze nach dem Schritt e), beispielsweise zu einer weiteren Aufnahmeeinrichtung oder einer Abgabeeinrichtung des Pipettierautomaten, insbesondere aufgrund von Kohäsions- und/oder Adhäsionskräften, an der Pipettenspitze verbleibt bzw. nicht von der Pipettenspitze weggeschleudert wird.

Nach dem Abgeben der Flüssigkeit in Schritt b) befindet sich die Öffnung oberhalb bevorzugt oberhalb der Oberfläche der in das Well abgegebenen Flüssigkeit, vorzugsweise wobei der Abstand der Öffnung von der Oberfläche einstellbar ist. Insbesondere kann vorgesehen sein, dass der Abstand der Öffnung von der Oberfläche automatisch einstellbar ist, beispielsweise in Abhängigkeit von der Viskosität der Flüssigkeit.

Die Bewegung von der Abgabestartposition in die Abstreifstartposition in Schritt c) umfasst vorzugsweise eine vertikale Bewegung der Pipettenspitze bzw. Öffnung.

Gemäß einem bevorzugten Aspekt ist oder umfasst die vertikale Bewegung in Schritt c) eine Absenkung der Pipettenspitze bzw. Öffnung und/oder befindet sich die Abstreifstartposition unterhalb der Abgabestartposition.

Gemäß einem anderen Aspekt ist oder umfasst die vertikale Bewegung in Schritt c) eine Anhebung der Pipettenspitze bzw. Öffnung und/oder befindet sich die Abstreifstartposition oberhalb der Abgabestartposition.

Die Abstreifendposition befindet sich vorzugsweise oberhalb der Abstreifstartposition, insbesondere vertikal darüber. Dies verhindert insbesondere eine Kontamination der Pipettenspitze beim Abstreifen.

Der Abstand, insbesondere der vertikale Abstand, zwischen der Abstreifstartposition und der Abstreifendposition beträgt vorzugsweise mindestens 1 mm. Dies ist einem effektiven Abstreifen von Flüssigkeit an der Seitenwand zuträglich und trägt somit zu einem hochgenauen Pipettieren bzw. wohldosierten Abgeben der Flüssigkeit in das Well bei.

Weiter ist der Abstand zwischen der Abstreifstartposition und der Abstreifendposition vorzugsweise einstellbar, insbesondere automatisch einstellbar, beispielsweise in Abhängigkeit von der Viskosität oder einer sonstigen Eigenschaft der Flüssigkeit, der Pipettenspitze und/oder der Seitenwand.

Nach Erreichen der Abstreifendposition in Schritt d) kann gemäß einem bevorzugten Aspekt ein erneutes Abstreifen von Flüssigkeit an der Seitenwand erfolgen, insbesondere bevor die Pipettenspitze in die Abgabeendposition bewegt wird. Zum bzw. beim erneuten Abstreifen wird die Pipettenspitze vorzugsweise in einer Rückführbewegung zurück in die Abstreifstartposition bewegt, wobei die Pipettenspitze bei der Rückführbewegung, insbesondere zu Beginn der Rückführbewegung, horizontal von der Seitenwand wegbewegt wird, und wobei nach der Rückführbewegung bzw. nach Erreichen der Abstreifstartposition die Pipettenspitze wieder in Richtung der Abstreifendposition bewegt wird bzw. der Schritt d) wiederholt wird. Die Rückführbewegung und der folgende Schritt d) können mehrfach erfolgen. Mit anderen Worten erfolgt vorzugsweise ein mehrfaches oder wiederholtes Abstreifen. Auf diese Weise kann das Abstreifergebnis verbessert bzw. die Menge von an der Pipettenspitze verbleibenden Flüssigkeit weiter minimiert werden. Dies kann beispielsweise bei hochviskosen oder stark schaumbildenden Flüssigkeiten sinnvoll sein bzw. zu einer Verbesserung führen.

Die Geschwindigkeit der Abstreifbewegung ist vorzugsweise geringer als eine Geschwindigkeit, insbesondere minimale, maximale oder durchschnittliche Geschwindigkeit, mit der die Pipettenspitze vor Erreichen der Abgabestartposition, nach Erreichen der Abgabeendposition und/oder bei einer Bewegung zwischen verschiedenen Wells bewegt wird, insbesondere um mindestens einen Faktor 2 oder 3, besonders bevorzugt um etwa einen Faktor 4. Dies ist einem effektiven Abstreifen zuträglich.

Vorzugsweise beträgt die Geschwindigkeit der Abstreifbewegung mindestens 0,1 mm/s und/oder höchstens 15 mm/s. Es ist bevorzugt, dass die Geschwindigkeit der Abstreifbewegung einstellbar ist. Vorzugsweise wird die Geschwindigkeit der Abstreifbewegung, insbesondere automatisch, in Abhängigkeit von der Viskosität der Flüssigkeit, der Oberflächenspannung der Flüssigkeit, der Grenzflächenspannung der Pipettenspitze, der Öffnung und/oder der Seitenwand des Wells und/oder der Grenzflächenspannung zwischen der Flüssigkeit, der Pipettenspitze, der Öffnung und/oder der Seitenwand des Wells (automatisch) eingestellt oder gesteuert.

Durch die Wahl und/oder (automatische) Einstellung bzw. Steuerung der Geschwindigkeit der Abstreifbewegung kann das Abstreifergebnis optimiert werden bzw. eine optimale oder gewünschte Balance zwischen einer Schnelligkeit von Pipettier-, Abgabe- und/oder Abstreifvorgängen und einer Minimierung der nach dem Abgabevorgang noch an der Pipettenspitze befindlichen Flüssigkeitsmenge getroffen werden.

Es ist bevorzugt, dass sich bei der Abstreifbewegung der Tropfen von der Pipettenspitze und/oder Öffnung zumindest weitgehend löst, vorzugsweise wobei durch die Abstreifbewegung die Wand streifenförmig benetzt wird und der Tropfen dadurch zumindest größtenteils an die Wand abgegeben wird.

Das Verfahren umfasst vorzugsweise einen Schritt f) Einsaugen von Luft in die Pipettenspitze, wobei der Schritt f) vor dem Schritt d) "Bewegen der Pipettenspitze von der Abstreifstartposition in eine Abstreifendposition" erfolgt oder der Schritt f) während Schritt d) startet.

Des Weiteren ist es bevorzugt, dass das Verfahren einen Schritt g) Einsaugen von Luft in die Pipettenspitze umfasst, wobei der Schritt g) nach dem Schritt e) "Bewegen der Pipettenspitze aus dem Well von der Abstreifendposition in eine Abgabeendposition" erfolgt oder der Schritt g) während Schritt e) startet, vorzugsweise wobei nach dem Schritt g) die Schritte a), c), d) und e) wiederholt werden.

Vorzugsweise ist die Richtung der horizontalen Bewegungen in den Verfahrensschritten c), d) und/oder e) einstellbar und/oder erfolgen die horizontalen Bewegungen, insbesondere bei einer Wiederholung von Verfahrensschritten, in unterschiedliche Richtungen.

Das Verfahren ist vorzugsweise ein computerimplementiertes Verfahren.

Gemäß einem weiteren, auch unabhängig realisierbaren Aspekt betrifft die vorliegende Erfindung einen Pipettierautomaten mit einer Pipettiervorrichtung zum Aufnehmen und Abgeben von Flüssigkeit und mindestens einer Aufnahmeeinrichtung zum Aufnehmen von Flüssigkeit von der Pipettiervorrichtung.

Der Pipettierautomat ist vorzugsweise zur Durchführung des vorschlagsgemäßen Verfahrens ausgebildet.

Insbesondere weist der Pipettierautomat Mittel auf, die so angepasst sind, dass sie das hierin beschriebene Verfahren ausführen.

Gemäß einem weiteren, auch unabhängig realisierbaren Aspekt betrifft die vorliegende Erfindung ein Computerprogramm, aufweisend Befehle, die bei Ausführung bewirken, dass der hierin beschriebene Pipettierautomat das hierin beschriebene Verfahren ausführt.

Gemäß einem weiteren, auch unabhängig realisierbaren Aspekt betrifft die vorliegende Erfindung ein computerlesbares Medium, auf dem das vorgenannte Computerprogramm gespeichert ist.

Insbesondere werden durch den Pipettierautomaten, das Computerprogramm und das computerlesbare Medium entsprechende Vorteile des Verfahrens erreicht.

Die vorgenannten Aspekte, Merkmale und Verfahrensschritte der vorliegenden Erfindung sowie die sich aus den Ansprüchen und der nachfolgenden Beschreibung ergebenden Aspekte, Merkmale und Verfahrensschritte der vorliegenden Erfindung können grundsätzlich unabhängig voneinander, aber auch in beliebiger Kombination bzw. Reihenfolge realisiert werden.

Weitere Aspekte, Vorteile, Merkmale und Eigenschaften der vorliegenden Erfindung ergeben sich aus den Ansprüchen und der nachfolgenden Beschreibung bevorzugter Ausführungsformen anhand der Figuren. Es zeigt:
- Fig. 1: eine schematische Darstellung eines vorschlagsgemäßen Pipettierautomaten;
- Fig. 2: eine schematische Darstellung einer Ausgangsposition bei einem vorschlagsgemäßen Verfahren zum Betreiben eines Pipettierautomaten;
- Fig. 3: eine schematische Darstellung einer Abgabestartposition bei einem vorschlagsgemäßen Verfahren zum Betreiben eines Pipettierautomaten;
- Fig. 4: eine schematische Darstellung einer Abstreifstartposition bei einem vorschlagsgemäßen Verfahren zum Betreiben eines Pipettierautomaten;
- Fig. 5: eine schematische Darstellung einer Abstreifendposition bei einem vorschlagsgemäßen Verfahren zum Betreiben eines Pipettierautomaten;
- Fig. 6: eine schematische Darstellung einer Abgabeendposition bei einem vorschlagsgemäßen Verfahren zum Betreiben eines Pipettierautomaten; und
- Fig. 7: eine schematische Darstellung eines Einsaugens von Luft bei einem vorschlagsgemäßen Verfahren zum Betreiben eines Pipettierautomaten.

In den Figuren werden für gleiche oder ähnliche Teile oder Elemente dieselben Bezugszeichen verwendet, wobei gleiche oder ähnliche Eigenschaften erreicht werden können, auch wenn von einer wiederholten Beschreibung abgesehen wird.

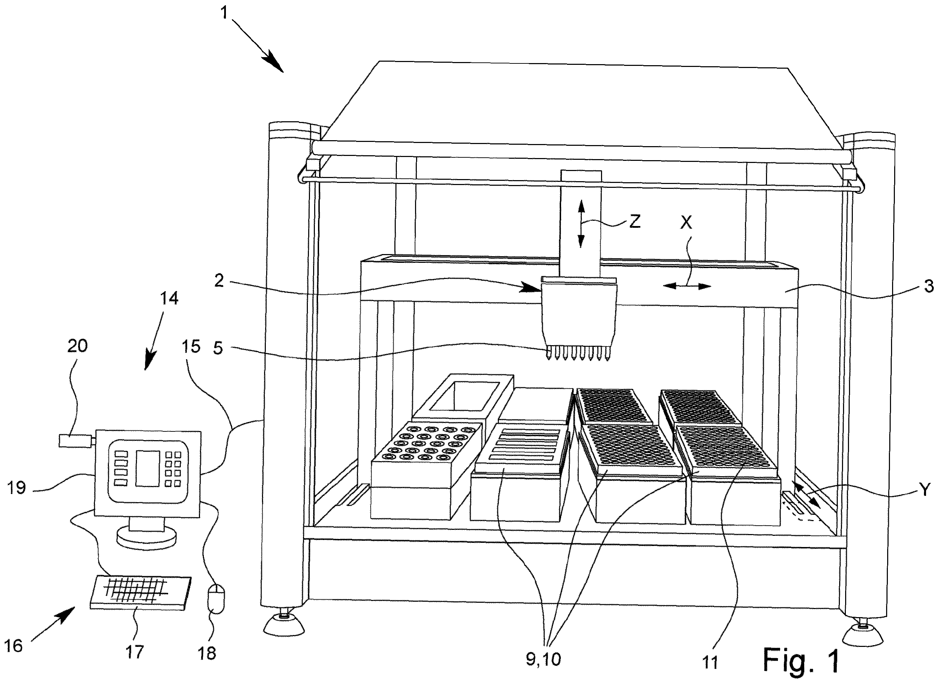

Fig. 1 zeigt in einer schematischen Darstellung einen vorschlagsgemäßen Pipettierautomaten 1.

Ein Pipettierautomat im Sinne der vorliegenden Erfindung ist vorzugsweise eine Vorrichtung, die zum vollautomatischen Pipettieren bzw. zum vollautomatischen Flüssigkeitstransfer ausgebildet ist.

Der Pipettierautomat 1 weist eine Pipettiervorrichtung 2, auch Pipettierkopf oder Liquid End genannt, auf.

Die Pipettiervorrichtung 2 ist vorzugsweise in mehrere Raumrichtungen bewegbar, insbesondere horizontal und/oder vertikal.

Zur Bewegung bzw. Positionierung der Pipettiervorrichtung 2 weist der Pipettierautomat 1 insbesondere eine Positioniereinrichtung 3 auf, durch die die Pipettiervorrichtung 2 bewegbar ist. Die Positioniereinrichtung 3 kann auch ein Roboterarm sein oder einen Roboterarm aufweisen, durch den die Pipettiervorrichtung 2 zumindest im Wesentlichen frei im Raum bewegbar ist.

Vorzugsweise ist die Pipettiervorrichtung 2 in mehrere Richtungen bewegbar, insbesondere in alle drei Raumrichtungen. Vorzugsweise ist die Pipettiervorrichtung 2 also in einer X-Richtung, einer Y- Richtung und/oder einer Z-Richtung bewegbar, insbesondere wobei die X-Richtung, Y-Richtung und Z-Richtung jeweils senkrecht zueinander sind bzw. ein kartesisches Koordinatensystem bilden. Die X-Richtung und Y-Richtung sind vorzugsweise horizontale Richtungen. Die Z-Richtung vorzugsweise eine vertikale Richtung. Mit anderen Worten ist die Pipettiervorrichtung 2 vorzugsweise, insbesondere mittels der Positioniereinrichtung 3, horizontal und/oder vertikal bewegbar. Die X-Richtung, Y-Richtung und Z-Richtung sind in Fig. 1 jeweils durch Pfeile dargestellt.

Die Pipettiervorrichtung 2 weist eine Verdrängereinrichtung 4 auf. Die Verdrängereinrichtung 4 ist zur Erzeugung von Unterdruck zum Ansaugen von Flüssigkeiten und zum Erzeugen von Überdruck zum Abgeben von Flüssigkeiten ausgebildet.

Des Weiteren weist die Pipettiervorrichtung 2 mindestens eine Pipettenspitze 5 auf. Die Pipettenspitze 5 kann als Spritze ausgebildet sein.

Die Pipettenspitze 5 ist vorzugsweise auswechselbar. Bevorzugt weist die Pipettiervorrichtung 2 mehrere Pipettenspitzen 5 auf. Hierdurch können zeitgleich mehrere Pipettiervorgänge durchgeführt werden.

Eine Pipettiervorrichtung 2 mit einer einzigen Pipettenspitze 5 wird auch als Einkanal-Pipettiervorrichtung bezeichnet und eine Pipettiervorrichtung 2 mit mehreren Pipettenspitzen 5 wird auch als Mehrkanal-Pipettiervorrichtung bezeichnet.

Die Pipettenspitze 5 weist ein erstes Ende 6 und ein zweites Ende 7 auf. Das erste Ende 6 ist mit der Verdrängereinrichtung 4 verbunden bzw. verbindbar. Das zweite Ende 7 weist eine Öffnung 8 zum Aufnehmen von Flüssigkeit F in die Pipettenspitze 5 und zum Abgeben von Flüssigkeit F von der Pipettenspitze 5 auf.

Die Pipettenspitze 5 ist vorzugsweise konisch ausgebildet und/oder verjüngt sich vorzugsweise von dem ersten Ende 6 zum zweiten Ende 7.

Der Pipettierautomat 1 weist vorzugsweise mindestens eine Aufnahmeeinrichtung 9 und/oder mindestens eine Abgabeeinrichtung 10 auf. Vorzugsweise weist der Pipettierautomat 1 mehrere Aufnahmeeinrichtungen 9 und/oder mehrere Abgabeeinrichtungen 10 auf.

Die Aufnahmeeinrichtung 9 dient zum Aufnehmen von Flüssigkeit F von der Pipettiervorrichtung 2 bzw. Pipettenspitze 5. Es ist also vorgesehen, dass mittels der Pipettiervorrichtung 2 Flüssigkeit F in die Aufnahmeeinrichtung 9 abgegeben wird.

Die Abgabeeinrichtung 10 dient zum Bereitstellen von Flüssigkeit F für die Pipettiervorrichtung 2 bzw. zum Darbieten von Flüssigkeit F für die Pipettiervorrichtung 2. Es ist also vorgesehen, dass die Pipettiervorrichtung 2 Flüssigkeit F von der Abgabeeinrichtung 10 aufnimmt bzw. aufsaugt oder ansaugt.

Insbesondere ist also vorgesehen, dass die Pipettiervorrichtung 2 Flüssigkeit F von einer oder mehreren Abgabeeinrichtungen 10 aufnimmt und die aufgenommene Flüssigkeit F bzw. einen Teil davon anschließend an eine oder mehrere Aufnahmeeinrichtungen 9 abgibt. Auf diese Weise kann mittels der Pipettiervorrichtung 2 Flüssigkeit F von den Abgabeeinrichtungen 10 zu den Aufnahmeeinrichtungen 9 befördert werden.

Die Pipettiervorrichtung 2 ist also insbesondere zwischen der/den Abgabeeinrichtung/en 10 und der/den Aufnahmeeinrichtung/en 9 bewegbar. Die Bewegung der Pipettiervorrichtung 2 erfolgt insbesondere mit der Positioniereinrichtung 3.

Die Aufnahmeeinrichtung 9 und/oder Abgabeeinrichtung 10 weist mindestens ein Well 11 auf. Ein Well 11 ist eine Kavität zur Aufnahme von Flüssigkeiten F. Das Well 11 hat vorzugsweise ein Aufnahmevolumen von einigen Mikrolitern oder Millilitern.

Das Well 11 weist eine Seitenwand 12 auf, die durch einen oberen Rand 13 begrenzt ist. Vorzugsweise verläuft die Seitenwand 12 im Wesentlichen vertikal.

Vorzugsweise weist die Aufnahmeeinrichtung 9 und/oder Abgabeeinrichtung 10 mehrere, insbesondere gleichartige bzw. identisch ausgebildete, Wells 11 auf. Die Wells 11 sind vorzugsweise in einem regelmäßigen Muster, insbesondere in Spalten und Reihen bzw. matrixartig in der Aufnahmeeinrichtung 9 und/oder Abgabeeinrichtung 10 angeordnet.

Die Aufnahmeeinrichtung 9 und/oder Abgabeeinrichtung 10 kann eine Vielzahl von Wells 11 aufweisen, beispielsweise auch mehrere hundert Wells 11. Die Aufnahmeeinrichtung 9 und/oder Abgabeeinrichtung 10 sind vorzugsweise als sogenannte Well-Platte bzw. Mikrotiter-Platte ausgebildet.

Der Pipettierautomat 1 weist vorzugsweise eine Steuerungseinrichtung 14 zur Steuerung des Pipettierautomaten 1 auf. Die Steuerungseinrichtung 14 ist vorzugsweise zur Steuerung der Pipettiervorrichtung 2 und/oder der Positioniereinrichtung 3 ausgebildet.

Insbesondere ist die Steuerungseinrichtung 14 dazu ausgebildet, die Pipettiervorrichtung 2 zwischen den Aufnahmeeinrichtungen 9 und den Abgabeeinrichtungen 10 zu bewegen. Vorzugsweise ist mittels der Steuereinrichtung 14 die Pipettiervorrichtung 2 derart steuerbar, dass zu pipettierende Flüssigkeit F von der Pipettiervorrichtung 2 aufgenommen und/oder abgegeben werden kann.

Die Steuerungseinrichtung 14 ist vorzugsweise über eine Datenschnittstelle 15 mit der Pipettiervorrichtung 2 verbunden. Auf diese Weise kann die Steuerungseinrichtung 14 mit der Pipettiervorrichtung 2 bzw. der Positioniereinrichtung 3 kommunizieren.

Die Steuerungseinrichtung 14 weist vorzugsweise eine oder mehrere Eingabeeinrichtungen 16, insbesondere eine Tastatur 17 und/oder eine Computermaus 18, auf. Ferner weist die Steuerungseinrichtung 14 vorzugsweise eine Anzeigeeinrichtung 19, insbesondere ein Display oder Touch-Display, auf. Das Touch-Display kann alternativ oder zusätzlich zu der Tastatur 17 und der Computermaus 18 als Eingabeeinrichtung 16 fungieren.

Der Pipettierautomat 1 ist insbesondere zur Durchführung des hier beschriebenen Verfahrens ausgebildet. Insbesondere weist der Pipettierautomat 1 Mittel auf, die so angepasst sind, dass sie das hier beschriebene Verfahren ausführen. Vorzugsweise weist die Steuereinrichtung 14 die Mittel zur Ausführung des Verfahrens auf bzw. sind die Mittel zur Ausführung des Verfahrens durch die Steuerungseinrichtung 14 gebildet.

Die Steuerungseinrichtung 14 weist vorzugsweise einen Prozessor oder Controller auf, um ein Computerprogramm zur Steuerung des Pipettierautomaten 1 auszuführen, insbesondere wobei die Mittel zur Ausführung des Verfahrens durch den Prozessor bzw. Controller gebildet sind.

Die Steuerungseinrichtung 14 weist vorzugsweise ein computerlesbares Medium 20 auf, auf dem ein Computerprogramm zur Steuerung des Pipettierautomaten 1 gespeichert sein kann. Die Steuerungseinrichtung 14 kann jedoch auch, insbesondere über das Internet, mit einem Server verbunden sein, wobei ein Computerprogramm zur Steuerung des Pipettierautomaten 1 von dem Server abrufbar oder in der Ferne ausführbar ist, insbesondere als sogenannte Client-Server-Anwendung.

Nachfolgend wird ein Verfahren zum Betreiben des Pipettierautomaten 1 näher erläutert. Das Verfahren ist insbesondere ein computerimplementiertes Verfahren.

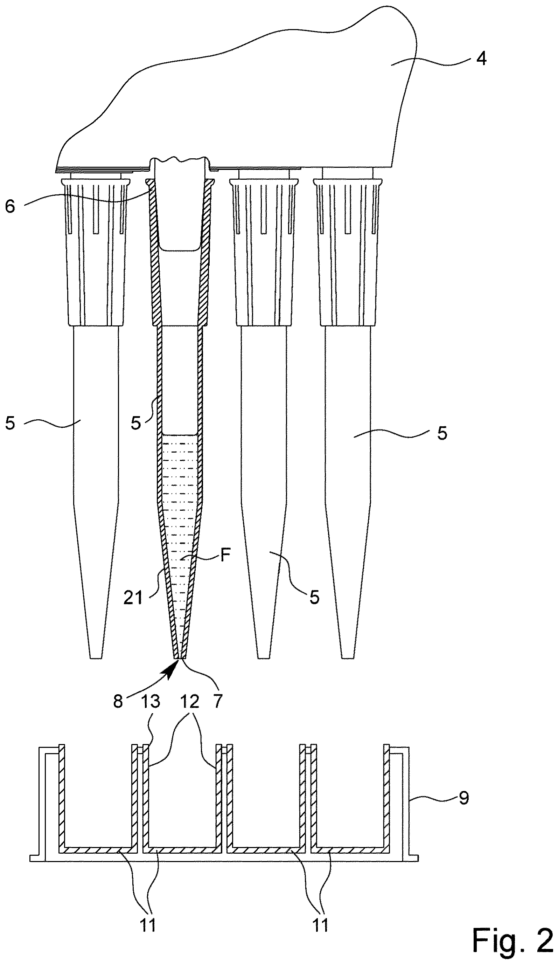

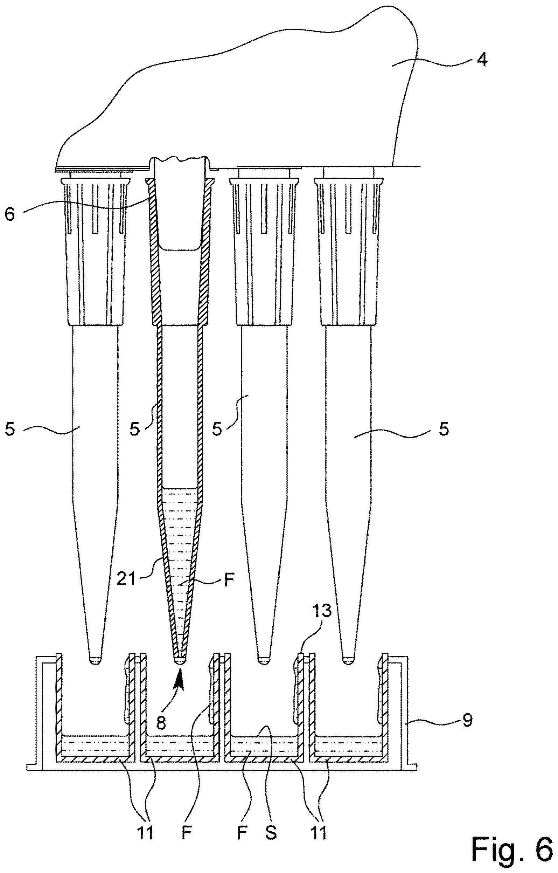

Das Verfahren bzw. verschiedene Verfahrensschritte werden insbesondere anhand der Figuren 2 bis 7 erläutert, in denen verschiedene Verfahrensschritte bzw. Positionen der Pipettiervorrichtung 2 und/oder Pipettenspitze 5 im Verlauf des Verfahrens beispielhaft und schematisch dargestellt sind.

Das vorschlagsgemäße Verfahren betrifft insbesondere das Abgeben von Flüssigkeit F in ein Well 11 der Aufnahmeeinrichtung 9 mittels der Pipettiervorrichtung 2. Das Verfahren ist also insbesondere ein Pipettierverfahren.

Es wird also insbesondere mittels der Pipettiervorrichtung 2 eine Flüssigkeit F, die in der Pipettenspitze 5 aufgenommen ist bzw. sich in der Pipettenspitze 5 befindet, in ein Well 11 der Aufnahmeeinrichtung 9 abgeben.

Das Verfahren kann insbesondere auch mit einer Mehrkanalpipette bzw. mit einer Pipettiervorrichtung 2 mit mehreren Pipettenspitzen 5 durchgeführt werden, sodass mittels der Pipettenspitzen 5 jeweils Flüssigkeit F in verschiedene Wells 11 abgegeben wird. Die nachfolgend bezüglich einer Pipettenspitze 5 bzw. bezüglich eines Wells 11 erläuterten Verfahrensschritte werden dann insbesondere mit allen Pipettenspitzen 5 und Wells 11 gleichzeitig und auf die gleiche Weise durchgeführt.

Insbesondere wird das Well 11 bzw. die Aufnahmeeinrichtung 9 bei dem vorliegenden Verfahren nicht bewegt, sondern verbleibt stationär in einer festen Position. Die Pipettiervorrichtung 2 bzw. Pipettenspitze 5 wird bei dem Verfahren, insbesondere mittels der Positioniereinrichtung 3 bewegt bzw. verfahren und bewegt sich damit insbesondere relativ zu dem Well 11 bzw. der Aufnahmeeinrichtung 9.

Grundsätzlich betrifft die vorliegende Erfindung einen Abgabevorgang, bei dem mit der Pipettiervorrichtung 2 bzw. Pipettenspitze 5 eine Flüssigkeit F in ein Well 11 abgegeben wird. Hierzu wird die Pipettenspitze 5 zunächst in eine Abgabestartposition bewegt, in der Flüssigkeit F von der Pipettenspitze 5 in das Well 11 abgegeben wird. Anschließend wird zum Abstreifen von gegebenenfalls an der Pipettenspitze 5 befindlichen Flüssigkeit F die Pipettenspitze 5 in eine Abstreifstartposition und von dort aus in eine in Abstreifendposition bewegt. Bei der Abstreifbewegung wird vorzugsweise Flüssigkeit F an der Seitenwand 12 des Wells 11 abgestreift. Von der Abstreifendposition wird die Pipettenspitze 5 dann in eine Abgabeendposition bewegt.

In Fig. 2 ist eine Ausgangsposition der Pipettenspitze 5 vor dem Abgabevorgang dargestellt. Die Ausgangsposition ist vorzugsweise eine beliebige Position der Pipettenspitze 5.

Ein Abgabevorgang beginnt mit der Positionierung der Pipettenspitze 5 in der Abgabestartposition und endet mit dem (endgültigen) Erreichen der Abgabeendposition. Der Abgabevorgang wird nachfolgend näher erläutert.

Vor bzw. Beginn des Abgabevorgangs befindet sich in der Pipettenspitze 5 eine zu pipettierende bzw. von der Pipettenspitze 5 abzugebende Flüssigkeit F. Es ist auch möglich, dass sich vor bzw. Beginn des Abgabevorgangs in dem Well 11 bereits Flüssigkeit F befindet.

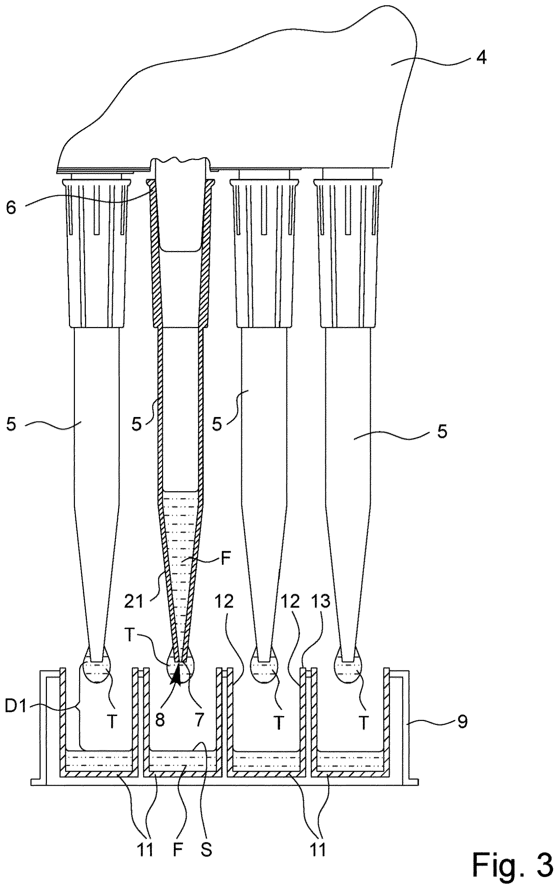

Zunächst wird die Pipettenspitze 5, insbesondere ausgehend von der Ausgangsposition, in der Abgabestartposition zum Abgeben von in der Pipettenspitze 5 befindlichen Flüssigkeit F in das Well 11 positioniert bzw. in die Abgabestartposition bewegt. Die Abgabestartposition ist in Fig. 3 dargestellt. Das Positionieren der Pipettenspitze 5 in der Abgabestartposition erfolgt insbesondere durch entsprechendes Verfahren der Pipettiervorrichtung 2 mittels der Positioniereinrichtung 3, die insbesondere durch die Steuereinrichtung 14 entsprechend gesteuert wird.

In der Abgabestartposition befindet sich die Öffnung 8 der Pipettenspitze 5 vorzugsweise oberhalb des Wells 11 bzw. in vertikaler Richtung innerhalb des oberen Rands 13 des Wells 11, sodass die von der Pipettenspitze 5 abzugebende Flüssigkeit F von der Öffnung 8 in das Well 11 hinein tropft. Hierbei kann sich die Öffnung 8 oberhalb des Rands 13, auf Höhe des Rands 13 oder unterhalb des Rands 13 befinden.

Anschließend wird Flüssigkeit F von der Pipettenspitze 5 durch die Öffnung 8 in das Well 11 abgegeben. Dies ist insbesondere in Fig. 3 dargestellt.

Zum Abgeben von Flüssigkeit F wird die Verdrängereinrichtung 4 der Pipettiervorrichtung 2 von der Steuerungseinrichtung 14 entsprechend angesteuert, , sodass in der Pipettenspitze 5 ein Überdruck aufgebaut wird, der die Flüssigkeit F durch die Öffnung 8 ausströmen lässt.

Vorzugsweise wird lediglich ein Teil der in der Pipettenspitze 5 befindlichen Flüssigkeit F in das Well 11 abgegeben, wie insbesondere in Fig. 3 dargestellt ist. Es ist jedoch auch möglich, die Flüssigkeit F vollständig in das Well 11 abzugeben.

Nach dem Abgeben von der Flüssigkeit F von der Pipettenspitze 5 befindet sich zumindest ein Teil der abgegebenen Flüssigkeit F an einer Außenseite 21 der Pipettenspitze 5. Insbesondere befindet sich die Flüssigkeit F in Form eines Tropfens T an der Öffnung 8 und/oder der Außenseite 21, wie es in Fig. 3 dargestellt ist.

Während die Flüssigkeit F abgegeben wird, befindet sich die Öffnung 8 vorzugsweise oberhalb des Flüssigkeitsspiegels bzw. der Oberfläche S der in das Well 11 abgegebenen Flüssigkeit F. Dies ist in Fig. 3 dargestellt.

Dies ist jedoch nicht zwingend. Grundsätzlich ist es auch möglich, dass sich die Öffnung 8 bei und/oder nach dem Abgeben von Flüssigkeit F zunächst auf Höhe oder unterhalb der Oberfläche S der in das Well 11 abgegebenen Flüssigkeit F befindet. In diesem Fall befindet sich nach dem Abgeben vorzugsweise die in dem Well 11 befindliche Flüssigkeit F an der Öffnung 8 und/oder der Außenseite 21.

Insbesondere beim Pipettieren bzw. Abgeben von schäumender Flüssigkeit F oder von Flüssigkeit F, die eine andere Dichte und/oder Viskosität als bereits im Well 11 befindliche Flüssigkeit F hat, kann es sinnvoll bzw. vorgesehen sein, dass sich die Öffnung 8 nach dem Abgeben der Flüssigkeit F unterhalb der Oberfläche S der im Well 11 befindlichen Flüssigkeit F befindet.

Insbesondere kann sich bereits in der Abgabestartposition die Öffnung 8 unterhalb der Oberfläche S befinden.

Nach dem Abgeben der Flüssigkeit F in das Well 11 weist die Öffnung 8 vorzugsweise einen Abstand D1 von der Oberfläche S auf. Der Abstand kann positiv, negativ oder gleich null sein, insbesondere wobei ein positiver Abstand bedeutet, dass sich die Öffnung 8 oberhalb der Oberfläche S befindet, ein negativer Abstand bedeutet, dass sich die Öffnung 8 nach dem Abgeben der Flüssigkeit F unterhalb der Oberfläche S befindet und ein Abstand von null bedeutet, dass sich die Öffnung 8 auf Höhe der Oberfläche S befindet.

Vorzugsweise ist der Abstand D1 automatisch einstellbar, insbesondere mittels der Steuereinrichtung 14. Der Abstand D1 kann insbesondere anhand des Volumens bzw. der Abmessungen des Wells 11 des Volumens der von der Pipettenspitze 5 abzugebenden Flüssigkeit F berechnet werden, wobei insbesondere auch berücksichtigt werden kann, dass sich gegebenenfalls schon vor dem Abgeben von Flüssigkeit F von der Pipettenspitze 5 in das Well 11 Flüssigkeit F in dem Well 11 befindet.

Wenn die Öffnung 8 sich nach dem Abgeben der Flüssigkeit F zunächst unterhalb der Oberfläche S befindet, wird die Öffnung 8 vor oder beim Bewegen in die Abstreifstartposition aus der Flüssigkeit F herausbewegt bzw. oberhalb der Oberfläche S positioniert, wobei sich ein Tropfen T an der Öffnung 8 bilden kann.

Anschließend wird die an der Außenseite 21 und/oder Öffnung 8 befindliche Flüssigkeit F, insbesondere der Tropfen T, an der Seitenwand 12 des Wells 11 abgestreift.

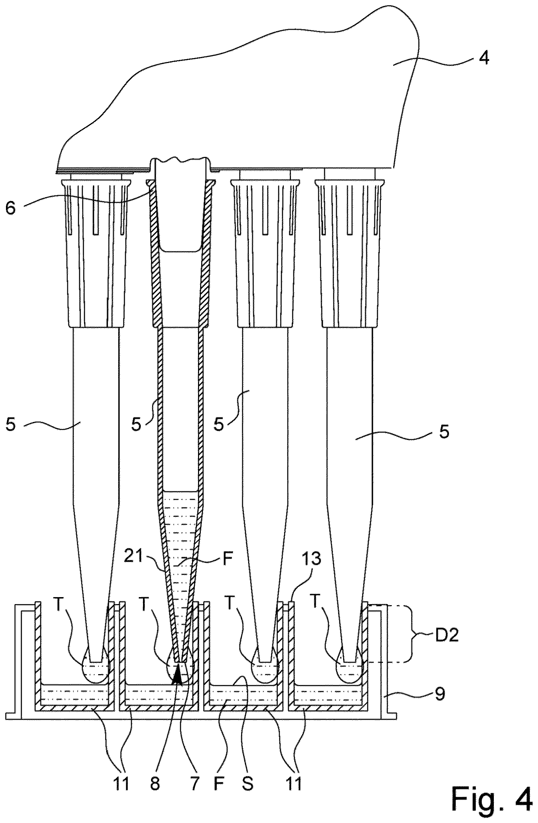

Dazu wird die Pipettenspitze 5 von der Abgabestartposition in die Abstreifstartposition bewegt. Die Abstreifstartposition ist in Fig. 4 dargestellt.

Bei der Abstreifbewegung bzw. beim Bewegen der Pipettenspitze 5 von der Abstreifstartposition in die Abstreifendposition löst sich vorzugsweise der Tropfen T von der Pipettenspitze 5 und/oder Öffnung 8 zumindest weitgehend.

Bei der bzw. durch die Abstreifbewegung wird die Seitenwand 12 vorzugsweise streifenförmig benetzt und der Tropfen T dadurch größtenteils an die Seitenwand 12 abgegeben. Im Gegensatz zu einer reinen Berührung der Flüssigkeit F an der Seitenwand 12 wird durch die Abstreifbewegung eine vorzugsweise vertikale Strecke an der Seitenwand 12 benetzt, sodass durch Kohäsions- und Adhäsionskräfte und/oder der Gewichtskraft der Flüssigkeit F an der benetzten Seitenwand 12 der Tropfen T von der Pipettenspitze 5 und/oder Öffnung 8 gezogen wird.

Vorzugsweise befindet sich in der Abstreifstartposition die Pipettenspitze 5 bzw. Öffnung 8 näher an der Seitenwand 12 des Wells 11 als in der Abgabestartposition. Das Bewegen der Pipettenspitze 5 von der Abgabestartposition in die Abstreifstartposition umfasst eine horizontale Bewegung der Pipettenspitze 5 bzw. Öffnung 8.

Der Ausdruck "umfasst eine horizontale Bewegung" ist bei der vorliegenden Offenbarung insbesondere so zu verstehen, dass die Bewegung grundsätzlich eine beliebige Bewegung der Pipettenspitze 5 bzw. Öffnung 8 sein kann, insbesondere auch eine Dreh- bzw. Rotations- und/oder Schwenkbewegung, bei der die Bewegung der Öffnung 8 eine horizontale Bewegungskomponente bzw. eine Bewegungskomponente in X- und/oder Y-Richtung umfasst. Anders ausgedrückt bedeutet der Ausdruck "umfasst eine horizontale Bewegung" bei der vorliegenden Offenbarung also insbesondere, dass die Bewegung bei vektorieller Zerlegung zumindest eine horizontale Komponente bzw. eine Komponente in X- und/oder Y-Richtung aufweist.

Vorzugsweise umfasst die Bewegung von der Abgabestartposition in die Abstreifstartposition eine vertikale Bewegung. Gemäß einem bevorzugten Aspekt ist die vertikale Bewegung eine Absenkung der Pipettenspitze 5 bzw. der Öffnung 8. Anders ausgedrückt befindet sich die Abstreifstartposition gemäß einem bevorzugten Aspekt unterhalb der Abgabestartposition.

Es ist jedoch auch möglich, dass es sich bei der vertikalen Bewegung um eine Anhebung der Pipettenspitze 5 bzw. Öffnung 8 handelt bzw. die Abstreifstartposition sich oberhalb der Abgabestartposition befindet.

In der Abstreifstartposition ist die Öffnung 8 der Pipettenspitze 5 unterhalb des oberen Rands 13 des Wells 11 positioniert. Weiter berührt in der Abstreifstartposition die Pipettenspitze 5 bzw. deren Außenseite 21 und/oder die darin befindliche Flüssigkeit F die Seitenwand 12. Insbesondere ist es nicht zwingend, dass die Pipettenspitze 5 die Seitenwand 12 berührt.

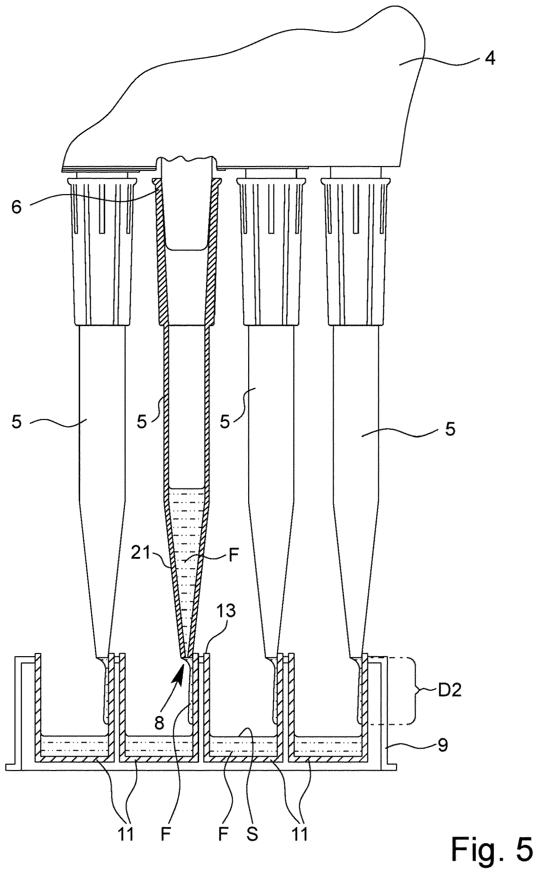

Nach Erreichen der Abstreifstartposition wird die Pipettenspitze 5 in einer Abstreifbewegung in die Abstreifendposition bewegt. Die Abstreifbewegung ist vorzugsweise eine Bewegung, die im Wesentlichen parallel zu der Seitenwand 12 verläuft bzw. bei der die Öffnung 8 parallel zur Seitenwand 12 bewegt wird. Die Abstreifendposition ist insbesondere in Fig. 5 dargestellt.

Die Abstreifbewegung kann vertikal und/oder horizontal verlaufen bzw. eine vertikale und/oder horizontale Bewegung der Pipettenspitze 5 bzw. Öffnung 8 bzw. eine Bewegung der Pipettenspitze 5 bzw. Öffnung 8 in X-, Y- und/oder Z-Richtung umfassen.

Es ist bevorzugt, dass sich die Abstreifendposition oberhalb der Abstreifstartposition befindet. Ganz besonders bevorzugt befindet sich die Abstreifendposition vertikal über der Abstreifstartposition.

Sofern die Pipettenspitze 5 konisch bzw. verjüngt ausgebildet ist, wie insbesondere in den Figuren dargestellt, umfasst die Abstreifbewegung vorzugsweise eine horizontale Bewegung der Pipettiervorrichtung 2, sodass der Abstand der Öffnung 8 von der Seitenwand 12 während der Abstreifbewegung zumindest im Wesentlichen konstant bleibt.

Die Abstreifbewegung kann jedoch auch schräg verlaufen, also insbesondere sowohl eine vertikale als auch eine horizontale Bewegung umfassen, oder eine ausschließlich horizontale Bewegung sein. Die horizontale Bewegung ist vorzugsweise eine Bewegung entlang der Seitenwand 12 des Wells 11, die vorzugsweise zylindrisch oder konisch ausgebildet ist. Hier sind jedoch auch andere Bewegungen möglich, die insbesondere an in die Geometrie des Wells 11 bzw. der Seitenwand 12 angepasst sind, sodass die Bewegungen im Wesentlichen parallel zu der Seitenwand 12 verlaufen.

In der Abstreifendposition ist die Öffnung 8 unterhalb oder auf Höhe des oberen Rands 13 des Wells 11 positioniert. Hierdurch wird insbesondere ein "Wegschnalzen" bzw. eine plötzliche Bewegung des zweiten Endes 7 der Pipettenspitze 5 ein Bewegen des zweiten Endes 7 über den Rand 13 verhindert, sodass dadurch verursachtes Wegschleudern von Flüssigkeit F bzw. eine damit verbundene Kontamination verhindert werden.

Die Abstreifstartposition und die Abstreifendposition weisen vorzugsweise einen Abstand D2, insbesondere vertikalen Abstand D2, voneinander auf. Der Abstand D2 beträgt vorzugsweise mindestens 1 mm. Der Abstand D2 ist vorzugsweise einstellbar, insbesondere mittels der Steuereinrichtung 14. Insbesondere ist der Abstand D2 zwischen Abstreifstartposition und der Abstreifendposition automatisch einstellbar bzw. wird der Abstand D2 mit den gespeicherten Geometriedaten der Komponenten automatisch eingestellt.

Die automatische Einstellung des Abstands D2 und/oder der Abstreifbewegung erfolgt vorzugsweise in Abhängigkeit von einer oder mehreren Kennzahlen.

Kennzahlen im Sinne der vorliegenden Offenbarung sind insbesondere die Oberflächenspannung der Flüssigkeit F, die Grenzflächenspannung der Pipettenspitze 5, der Öffnung 8 und/oder der Seitenwand 12 des Wells 11 und/oder die Grenzflächenspannung zwischen der Flüssigkeit F, der Pipettenspitze 5, der Öffnung 8 und/oder der Seitenwand 12.

Anhand der Kennzahlen bzw. in Abhängigkeit von den Kennzahlen erfolgt vorzugsweise automatisch eine Einstellung von einem oder mehreren Parametern bei der Bewegung und/oder Positionierung der Pipettenspitze 5 bzw. Öffnung 8, insbesondere mittels der Steuereinrichtung 14.

Die Geschwindigkeit der Abstreifbewegung ist vorzugsweise geringer als eine Geschwindigkeit, mit der die Pipettiervorrichtung 2 bzw. Pipettenspitze 5 außerhalb des hierin beschriebenen Abgabevorgangs, insbesondere also vor Erreichen der Abgabestartposition, nach Erreichen der Abgabeendposition und/oder bei einer Bewegung zwischen verschiedenen Wells 11, Aufnahmeeinrichtungen 9 und/oder Abgabeeinrichtungen 10 bewegt wird. Insbesondere ist die Geschwindigkeit der Abstreifbewegung geringer als eine minimale, maximale oder durchschnittliche Geschwindigkeit, mit der die Pipettenspitze 5 bzw. Pipettiervorrichtung 2 außerhalb des hierin beschriebenen Abgabevorgangs bewegt wird. Insbesondere beträgt die Geschwindigkeit der Abstreifbewegung die höchstens Hälfte oder ein Drittel, besonders bevorzugt etwa ein Viertel der, insbesondere minimalen, maximalen oder durchschnittlichen, Geschwindigkeit, mit der die Pipettenspitze 5 außerhalb des Abgabevorgangs bewegt wird.

Die Geschwindigkeit der Abstreifbewegung bzw. bei der Bewegung von der Abstreifstartposition in die Abstreifendposition beträgt vorzugsweise mindestens 0,1 mm/s und/oder höchstens 15 mm/s. In einem besonders bevorzugten Beispiel beträgt die Geschwindigkeit der Abstreifbewegung etwa 6 mm/s und/oder beträgt die übliche Geschwindigkeit bzw. Geschwindigkeit außerhalb des Abgabevorgangs bei einer Bewegung der Pipettenspitze 5 etwa 27,4 mm/s.

Weiterhin ist es möglich, dass die Geschwindigkeit im Laufe der Abstreifbewegung variiert wird, beispielsweise bei der Bewegung von der Abstreifstartposition in die Abstreifendposition ausgehend von einer Anfangsgeschwindigkeit verringert oder erhöht wird.

Die Geschwindigkeit der Abstreifbewegung wird vorzugsweise eingestellt oder gesteuert bzw. geregelt, insbesondere automatisch, in Abhängigkeit von einer oder mehrerer der (zuvor aufgeführten) Kennzahlen und/oder durch die Steuereinrichtung 14.

Nach dem Erreichen der Abstreifendposition wird die Pipettenspitze 5 vorzugsweise in die Abgabeendposition bewegt. Hierbei wird die Pipettenspitze 5 zumindest horizontal bzw. in X-Richtung und/oder Y-Richtung bewegt bzw. umfasst das Bewegen von der Abstreifendposition in die Abgabeendposition eine horizontale Bewegung der Pipettenspitze 5 bzw. Öffnung 8. In der Abgabeendposition weist die Pipettenspitze 5 bzw. Öffnung 8 einen größeren Abstand, insbesondere horizontalen Abstand, zu der Seitenwand 12 auf als in der Abstreifendposition. Vorzugsweise wird die Pipettenspitze 5 bzw. Öffnung 8 bei der Bewegung in die Abgabeendposition aus dem Well 11 herausbewegt bzw. in eine Position oberhalb des oberen Rands 13 bewegt. Mit anderen Worten befindet sich in der Abgabeendposition die Öffnung 8 vorzugsweise außerhalb des Wells 11 bzw. oberhalb des oberen Rands 13. Dies ist jedoch nicht zwingend.

Besonders bevorzugt erfolgt bei der Bewegung aus der Abstreifendposition hinaus zumindest anfänglich ausschließlich eine horizontale Bewegung ausgehend von der Abstreifendposition. Hierdurch kann ein Wegschnalzen bzw. eine plötzliche Bewegung der Pipettenspitze 5, die zu einem Wegschleudern von Flüssigkeit F von der Pipettenspitze 5 bzw. zu Kontaminationen führen könnte, verhindert werden.

Es ist also besonders bevorzugt, dass die Pipettenspitze 5 bzw. Öffnung 8 bei der Bewegung aus Abstreifendposition hinaus bzw. bei der Bewegung in die Abgabeendposition zunächst ausschließlich horizontal bewegt wird, insbesondere wobei sich an diese ausschließlich horizontale Bewegung optional eine vertikale Bewegung bzw. eine Bewegung, die eine horizontale und vertikale Bewegung umfasst, anschließt. Mit anderen Worten umfasst die Bewegung von der Abstreifendposition in die Abgabeendposition vorzugsweise zwei Bewegungsabschnitte, wobei im ersten Bewegungsabschnitt eine ausschließlich horizontale Bewegung erfolgt und im sich daran anschließenden zweiten Bewegungsabschnitt eine vertikale Bewegung erfolgt oder eine horizontale und eine vertikale Bewegung einander überlagert sind.

Die Richtung der horizontalen Bewegungen in einem oder mehreren der zuvor erläuterten Schritte "Bewegen der Pipettenspitze 5 von der Abgabestartposition in die Abstreifstartposition", "Bewegen der Pipettenspitze 5 von der Abstreifstartposition in die Abstreifendposition" und/oder "Bewegen der Pipettenspitze 5 von der Abstreifendposition in die Abgabeendposition" ist vorzugsweise einstellbar, insbesondere manuell.

Insbesondere können die horizontalen Bewegungen in den zuvor erläuterten Schritten "Bewegen der Pipettenspitze 5 von der Abgabestartposition in die Abstreifstartposition" und "Bewegen der Pipettenspitze 5 von der Abstreifendposition in die Abgabeendposition" in unterschiedliche, insbesondere einander entgegengesetzte, Richtungen erfolgen.

Mit dem Erreichen der Abgabeendposition ist der Abgabevorgang vorzugsweise beendet.

Nach dem Erreichen der Abgabeendposition wird die Pipettenspitze 5 vorzugsweise zu einer Abgabeeinrichtung 10 bewegt, um dort weitere bzw. erneut Flüssigkeit F in die Pipettenspitze 5 aufzunehmen/einzusaugen oder wird die Pipettenspitze 5 zu einer anderen Aufnahmeeinrichtung 9 oder einem anderen Well 11 der gleichen Aufnahmeeinrichtung 9 bewegt, um dort erneut Flüssigkeit F von der Pipettenspitze 5 abzugeben.

Nach Erreichen der Abstreifendposition kann alternativ zu der Bewegung in die Abgabeendposition auch ein erneutes Abstreifen von Flüssigkeit F an der Seitenwand 12 erfolgen.

Hierzu wird die Pipettenspitze 5 vorzugsweise in einer Rückführbewegung zurück in die Abstreifstartposition bewegt, insbesondere um die Abstreifbewegung zu wiederholen bzw. ein erneutes oder weiteres Abstreifen durchzuführen.

Bei der Rückführbewegung wird die Pipettenspitze 5 ausgehend von der Abstreifendposition vorzugsweise zunächst horizontal von der Seitenwand 12 wegbewegt. Dieser horizontalen Bewegung kann auch eine gleichzeitige vertikale Bewegung überlagert sein, wobei es jedoch bevorzugt ist, dass das Wegbewegen der Pipettenspitze 5 von der Seitenwand 12 ausgehend von der Abstreifendposition in einer zumindest anfänglich ausschließlich horizontalen Bewegung erfolgt, insbesondere wie dies voranstehend im Zusammenhang mit der Bewegung von der Abstreifendposition in die Abgabeendposition beschrieben wurde. Anschließend wird die Pipettenspitze 5 vorzugsweise wieder zurück in die Abstreifstartposition bewegt.

Es ist jedoch nicht zwingend, dass die Pipettenspitze 5 zum erneuten Abstreifen von Flüssigkeit F bzw. bei der Rückführbewegung in die zuvor eingenommene Abstreifstartposition bewegt wird. Grundsätzlich ist auch möglich, dass die Pipettenspitze 5 in eine andere Position bewegt wird, ausgehend von der ein (erneutes) Abstreifen von Flüssigkeit F an der Seitenwand 12 erfolgt.

Nach Erreichen der Abstreifstartposition erfolgt vorzugsweise ein erneutes Abstreifen von Flüssigkeit F an der Seitenwand 12. Insbesondere wird hierzu erneut die bereits zuvor erläuterte Abstreifbewegung in die Abstreifendposition durchgeführt.

Falls das erneute Abstreifen nicht ausgehend von der vorherigen Abstreifstarposition erfolgt, unterscheidet sich die Abstreifendposition, in welche die Pipettenspitze 5 beim erneuten Abstreifen bewegt wird, vorzugsweise ebenfalls von der zuvor erläuterten Abstreifendposition. Die zuvor erläuterten Eigenschaften bzw. Schritte bezüglich der Abstreifstartposition, Abstreifendposition und Abstreifbewegung gelten dann vorzugsweise analog. Insbesondere wird zum bzw. beim erneuten Abstreifen die Pipettenspitze 5 zumindest im Wesentlichen parallel zur Seitenwand 12 bewegt und/oder befindet sich die Abstreifendposition beim erneuten Abstreifen vorzugsweise oberhalb, insbesondere vertikal oberhalb, der Abstreifstartposition beim erneuten Abstreifen.

Gemäß einem Aspekt kann das erneute Abstreifen im Wesentlichen identisch zu dem ersten Abstreifen bzw. der Abstreifbewegung von der Abstreifstartposition in die Abstreifendposition erfolgen, wobei die Abstreifstartposition und Abstreifendposition beim erneuten Abstreifen jedoch diametral gegenüber der Abstreifstartposition und Abstreifendposition beim ersten Abstreifen liegen, insbesondere bezüglich einer (nicht dargestellten) Mittelachse bzw. Symmetrieachse des Wells 11 bzw. der Seitenwand 12.

Das Abstreifen bzw. das Rückführen in die Abstreifstartposition und Wiederholen der Abstreifbewegung kann mehrfach erfolgen. Die Anzahl der Wiederholungen ist vorzugsweise einstellbar, insbesondere mittels der Steuereinrichtung 14.

Die Anzahl der Wiederholungen wird vorzugsweise eingestellt oder gesteuert bzw. geregelt, insbesondere automatisch, in Abhängigkeit von einer oder mehrerer der (zuvor aufgeführten) Kennzahlen und/oder durch die Steuereinrichtung 14.

Bei einer Wiederholung von Verfahrensschritten, insbesondere bei einem wiederholten Abstreifen, können Bewegungen, insbesondere horizontale Bewegungen, der Pipettenspitze 5 bzw. Öffnung 8 in entgegengesetzte Richtungen erfolgen. Wenn beispielsweise bei einem Verfahrensschritt eine Bewegung in positive X-Richtung (beispielsweise nach rechts in den Figuren) erfolgt, kann bei einer Wiederholung des Verfahrensschritts die Bewegung in negative X-Richtung (beispielsweise nach links in den Figuren) erfolgen. Dies betrifft insbesondere die Bewegung von der Abgabestartposition in die Abstreifstartposition, die Bewegung von der Abstreifstartposition in die Abstreifendposition und/oder die Bewegung von der Abstreifendposition in die Abgabeendposition.

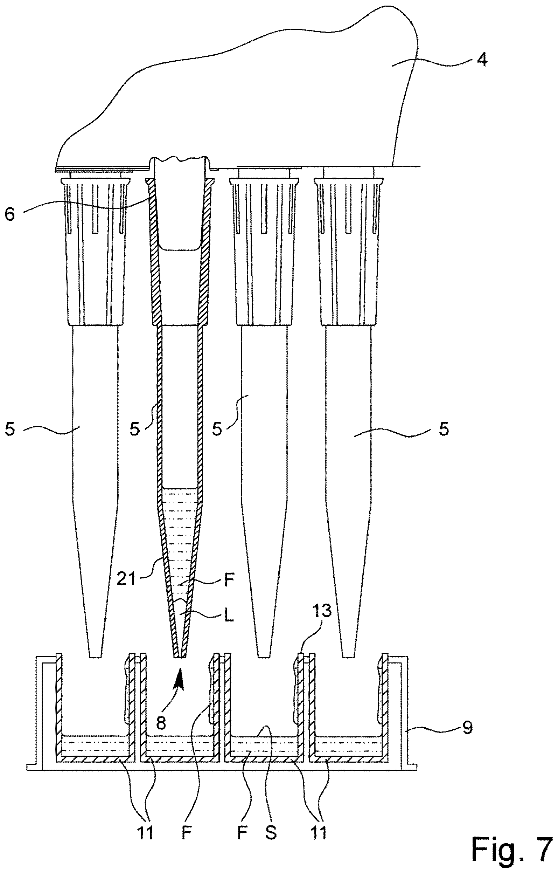

Gemäß einem bevorzugten Aspekt umfasst das Verfahren auch einen oder mehrere Schritte, bei dem/denen Luft L mittels der Verdrängereinrichtung 4 durch die Öffnung 8 in die Pipettenspitze 5 eingesaugt wird. Dies ist insbesondere in Fig. 7 dargestellt. Es ist erkennbar, dass die Luft L in die Pipettenspitze 5 eingesaugt wurde, sodass die in der Pipettenspitze 5 befindliche Flüssigkeit F sich nicht direkt an dem zweiten Ende 7 bzw. der Öffnung 8 befindet, sondern sich eingesaugte Luft L zwischen der Öffnung 8 bzw. dem zweiten Ende 7 und der Flüssigkeit F befindet.

Das Einsaugen von Luft L kann einmalig oder mehrmals erfolgen.

Vorzugsweise erfolgt oder beginnt das Einsaugen von Luft L vor oder während eines Abstreifens von Flüssigkeit F an der Seitenwand 12, insbesondere also während der Abstreifbewegung bzw. während des Bewegens der Pipettenspitze 5 von der Abstreifstartposition in die Abstreifendposition. Insbesondere kann das Einsaugen von Luft L in die Pipettenspitze 5 nach dem Abgeben von Flüssigkeit F in der Abgabestartposition, vor oder während des Bewegens der Pipettenspitze 5 von der Abgabestartposition in die Abstreifstartposition und/oder vor Erreichen der Abstreifendposition beginnen oder erfolgen. Vorzugsweise ist das Einsaugen von Luft vor oder beim Erreichen der Abstreifendposition abgeschlossen. Dies ist jedoch nicht zwingend.

Alternativ oder zusätzlich kann ein Einsaugen von Luft L in die Pipettenspitze 5 nach dem bzw. nach einem erstmaligen Erreichen der Abstreifendposition beginnen. Insbesondere erfolgt oder beginnt das Einsaugen von Luft L in die Pipettenspitze 5 während der zuvor erläuterten Rückführbewegung und/oder während der Bewegung der Pipettenspitze 5 von der Abstreifendposition in die Abgabeendposition.

Nach dem Einsaugen von Luft L in die Pipettenspitze 5 werden vorzugsweise einer oder mehrerer der folgenden Schritte durchgeführt bzw. wiederholt: Positionieren der Pipettenspitze 5 in der Abgabestartposition, Bewegen der Pipettenspitze 5 von der Abgabestartposition in die Abstreifstartposition, Bewegen der Pipettenspitze 5 von der Abstreifstartposition in die Abstreifendposition, Bewegen der Pipettenspitze 5 von der Abstreifendposition in die Abgabeendposition.

Der Schritt "Abgeben von Flüssigkeit F von der Pipettenspitze 5 an das Well 11" wird nach einem Einsaugen von Luft L in die Pipettenspitze 5 vorzugsweise nicht wiederholt.

Bei dem vorliegenden Verfahren ist die Pipettenspitze 5 vorzugsweise vertikal bzw. in Z-Richtung ausgerichtet, wie insbesondere in den Figuren 2 bis 7 dargestellt ist. Die Pipettenspitze 5 ist insbesondere in der Abgabestartposition, Abstreifstartposition, Abstreifendposition und/oder Abgabeendposition vertikal ausgerichtet. Dies erleichtert vorzugsweise die Steuerung bzw. Bewegung der Pipettenspitze 5 und/oder ermöglicht die Verwendung handelsüblicher Pipettenspitzen 5.

Verschiedene Aspekte des vorliegenden Verfahrens, insbesondere das Abstreifen von Flüssigkeit F bzw. das Bewegen der Pipettenspitze 5 können vorzugsweise auch bei einem Aufnehmen bzw. Einsaugen von Flüssigkeit F mit der Pipettenspitze 5, insbesondere aus einem Well 11 bzw. von einer Abgabeeinrichtung 10, durchgeführt werden.

Insbesondere ist bei dem vorliegenden Verfahren die Aufnahmeeinrichtung 9 bzw. das Well 11 stationär und/oder wird bei dem vorliegenden Verfahren die Pipettiervorrichtung 2 bzw. Pipettenspitze 5 im Raum und/oder relativ zu dem Well 11 bzw. der Aufnahmeeinrichtung 9 bewegt.

Einzelne Aspekte der voranstehend beschriebenen Erfindung können unabhängig voneinander, aber auch in beliebiger Kombination realisiert werden und vorteilhaft sein.

### Bezugszeichenliste:

| | | | |
|---|---|---|---|
| 1 | Pipettierautomat | 17 | Tastatur |
| 2 | Pipettiervorrichtung | 18 | Computermaus |
| 3 | Positioniereinrichtung | 19 | Anzeigeeinrichtung |
| 4 | Verdrängereinrichtung | 20 | computerlesbares Medium |
| 5 | Pipettenspitze | 21 | Außenseite von 5 |
| 6 | erstes Ende von 5 | | |
| 7 | zweites Ende von 5 | D1 | Abstand |
| 8 | Öffnung | D2 | Abstand |
| 9 | Aufnahmeeinrichtung | F | Flüssigkeit |
| 10 | Abgabeeinrichtung | L | Luft |
| 11 | Well | S | Oberfläche |
| 12 | Seitenwand | T | Tropfen |
| 13 | oberer Rand von 12 | X | Bewegungsrichtung von 2 |
| 14 | Steuerungseinrichtung | Y | Bewegungsrichtung von 2 |
| 15 | Datenschnittstelle | Z | Bewegungsrichtung von 2 |
| 16 | Eingabeeinrichtung | | |

## Patentansprüche

1. Verfahren, insbesondere computerimplementiertes Verfahren, zum Betreiben eines Pipettierautomaten (1) mit einer Pipettiervorrichtung (2) zum Aufnehmen und Abgeben von Flüssigkeit (F) und mindestens einer Aufnahmeeinrichtung (9) zum Aufnehmen von Flüssigkeit (F) von der Pipettiervorrichtung (2),
wobei die Pipettiervorrichtung (2) eine Verdrängereinrichtung (4) und eine vorzugsweise auswechselbare Pipettenspitze (5) mit einem ersten Ende (6) und einem zweiten Ende (7) aufweist, wobei das erste Ende (6) mit der Verdrängereinrichtung (4) verbunden ist und das zweite Ende (6) eine Öffnung (8) zum Aufnehmen von Flüssigkeit (F) in die Pipettenspitze (5) und Abgeben von Flüssigkeit (F) von der Pipettenspitze (5) aufweist,
wobei die Aufnahmeeinrichtung (9) mindestens ein Well (11) mit einer vorzugsweise im Wesentlichen vertikalen Seitenwand (12) mit einem oberen Rand (13) aufweist,
wobei das Verfahren die folgenden Schritte umfasst:
a) Positionieren der Pipettenspitze (5) in einer Abgabestartposition zum Abgeben von in der Pipettenspitze (5) befindlichen Flüssigkeit (F) in das Well (11),
b) Abgeben von Flüssigkeit (F) aus der Pipettenspitze (5) durch die Öffnung (8), wobei sich nach dem Abgeben zumindest ein Teil der abgegebenen Flüssigkeit (F) an einer Außenseite (21) der Pipettenspitze (5) und/oder der Öffnung (8) befindet, insbesondere in Form eines Tropfens (T),
c) Bewegen der Pipettenspitze (5) von der Abgabestartposition in eine Abstreifstartposition, wobei das Bewegen eine horizontale Bewegung der Pipettenspitze (5) bzw. Öffnung (8) umfasst, wobei in der Abstreifstartposition die Öffnung (8) der Pipettenspitze (5) unterhalb des oberen Rands des Wells (11) positioniert ist und die Pipettenspitze (5) und/oder die daran befindliche Flüssigkeit (F) die Seitenwand (12) des Wells (11) berührt,
d) Bewegen der Pipettenspitze (5) von der Abstreifstartposition in eine Abstreifendposition in einer Abstreifbewegung im Wesentlichen parallel zu der Seitenwand (12), wobei das Bewegen eine vertikale und/oder horizontale Bewegung der Pipettenspitze (5) bzw. Öffnung (8) umfasst, wobei in der Abstreifendposition die Öffnung (8) unterhalb oder auf Höhe des oberen Rands (13) des Wells (11) positioniert ist, wobei sich während der Abstreifbewegung Flüssigkeit (F) von der Pipettenspitze (5) löst und/oder die Seitenwand (12) des Wells (11) benetzt,
e) Bewegen der Pipettenspitze (5) von der Abstreifendposition in eine Abgabeendposition, wobei das Bewegen eine horizontale Bewegung der Pipettenspitze (5) bzw. Öffnung (8) umfasst und in der Abgabeendposition die Pipettenspitze (5) einen größeren Abstand zu der Seitenwand (12) des Wells (11) aufweist als in der Abstreifendposition.

2. Verfahren nach Anspruch 1, wobei sich nach dem Abgeben der Flüssigkeit (F) in Schritt b) die Öffnung (8) oberhalb der Oberfläche (S) der in das Well (11) abgegebenen Flüssigkeit (F) befindet, vorzugsweise wobei der Abstand (D1) der Öffnung (8) von der Oberfläche (S), insbesondere automatisch, einstellbar ist bzw. eingestellt wird.

3. Verfahren nach Anspruch 1 oder 2, wobei die Bewegung von der Abgabestartposition in die Abstreifstartposition in Schritt c) eine vertikale Bewegung, insbesondere eine Absenkung, der Pipettenspitze (5) bzw. Öffnung (8) umfasst und/oder die Abstreifstartposition sich unterhalb der Abgabestartposition befindet.

4. Verfahren nach Anspruch 1 oder 2, wobei die Bewegung von der Abgabestartposition in die Abstreifstartposition in Schritt c) eine vertikale Bewegung, insbesondere eine Anhebung, der Pipettenspitze (5) bzw. Öffnung (8) umfasst und/oder die Abstreifstartposition sich oberhalb der Abgabestartposition befindet.

5. Verfahren nach einem der voranstehenden Ansprüche, wobei sich die Abstreifendposition oberhalb der Abstreifstartposition, insbesondere vertikal darüber, befindet, und/oder wobei der Abstand (D2), insbesondere der vertikale Abstand (D2), zwischen der Abstreifstartposition und der Abstreifendposition mindestens 1 mm beträgt, vorzugsweise wobei der Abstand (D2) einstellbar ist.

6. Verfahren nach einem der voranstehenden Ansprüche, wobei die Pipettenspitze (5) nach Erreichen der Abstreifendposition in Schritt d) ein erneutes Abstreifen von Flüssigkeit (F) an der Seitenwand (12) erfolgt, insbesondere wobei die Pipettenspitze (5) in einer Rückführbewegung zurück in die Abstreifstartposition bewegt wird, wobei die Pipettenspitze (5) bei der Rückführbewegung, insbesondere zu Beginn der Rückführbewegung, horizontal von der Seitenwand (12) wegbewegt wird, und wobei nach der Rückführbewegung bzw. nach Erreichen der Abstreifstartposition die Pipettenspitze (5) wieder in Richtung der Abstreifendposition bewegt wird bzw. der Schritt d) wiederholt wird, vorzugsweise die Rückführbewegung und der folgende Schritt d) mehrfach erfolgen.

7. Verfahren nach einem der voranstehenden Ansprüche, wobei die Geschwindigkeit der Abstreifbewegung, insbesondere um mindestens einen Faktor 2 oder 3, besonders bevorzugt um etwa einen Faktor 4, geringer ist als eine Geschwindigkeit, insbesondere minimale, maximale oder durchschnittliche Geschwindigkeit, mit der die Pipettenspitze (5) vor Erreichen der Abgabestartposition, nach Erreichen der Abgabeendposition und/oder bei einer Bewegung zwischen verschiedenen Wells (11) bewegt wird, und/oder wobei die Geschwindigkeit der Abstreifbewegung mindestens 0,1 mm/s und/oder höchstens 15 mm/s beträgt, vorzugsweise wobei die Geschwindigkeit einstellbar ist.

8. Verfahren nach einem der voranstehenden Ansprüche, wobei die Geschwindigkeit der Abstreifbewegung, insbesondere automatisch, in Abhängigkeit von der Viskosität der Flüssigkeit (F), der Oberflächenspannung der Flüssigkeit (F), der Grenzflächenspannung der Pipettenspitze (5), der Öffnung (8) und/oder der Seitenwand (12) des Wells (11) und/oder der Grenzflächenspannung zwischen der Flüssigkeit (F), der Pipettenspitze (5), der Öffnung (8) und/oder der Seitenwand (12) des Wells (11) eingestellt oder gesteuert wird.

9. Verfahren nach einem der voranstehenden Ansprüche, wobei sich bei der Abstreifbewegung der Tropfen (T) von der Pipettenspitze (5) und/oder Öffnung (8) zumindest weitgehend löst, vorzugsweise wobei durch die Abstreifbewegung die Seitenwand (12) streifenförmig benetzt wird und der Tropfen (T) dadurch größtenteils an die Seitenwand (12) abgegeben wird.

10. Verfahren nach einem der voranstehenden Ansprüche, wobei das Verfahren einen Schritt f) Einsaugen von Luft (L) in die Pipettenspitze (5) umfasst, wobei der Schritt f) vor dem Schritt d) "Bewegen der Pipettenspitze (5) von der Abstreifstartposition in eine Abstreifendposition" erfolgt oder der Schritt f) während Schritt d) startet.

11. Verfahren nach einem der voranstehenden Ansprüche, wobei das Verfahren einen Schritt g) Einsaugen von Luft (L) in die Pipettenspitze (5) umfasst, wobei der Schritt g) nach dem Schritt e) "Bewegen der Pipettenspitze (5) von der Abstreifendposition in eine Abgabeendposition" erfolgt oder der Schritt g) während Schritt e) startet, vorzugsweise wobei nach dem Schritt g) die Schritte a), c), d) und e) wiederholt werden.

12. Verfahren nach einem der voranstehenden Ansprüche, wobei die Richtung der horizontalen Bewegungen in den Verfahrensschritten c), d) und/oder e) einstellbar ist und/oder die horizontalen Bewegungen, insbesondere bei einer Wiederholung von Verfahrensschritten, in unterschiedliche Richtungen erfolgen.

13. Pipettierautomat (1) mit einer Pipettiervorrichtung (2) zum Aufnehmen und Abgeben von Flüssigkeit (F) und mindestens einer Aufnahmeeinrichtung (9) zum Aufnehmen von Flüssigkeit (F) von der Pipettiervorrichtung (2), wobei der Pipettierautomat (1) Mittel aufweist, die so angepasst sind, dass sie das Verfahren nach einem der voranstehenden Ansprüche ausführen.

14. Computerprogramm, aufweisend Befehle, die bei Ausführung bewirken, dass der Pipettierautomat (1) nach Anspruch 13 die Verfahrensschritte nach einem der Ansprüche 1 bis 12 ausführt.

15. Computerlesbares Medium (20), auf dem das Computerprogramm nach Anspruch 14 gespeichert ist.
